# EUROPEAN PATENT SPECIFICATION

(11) **EP 1 646 908 B1**
(45) Date of publication and mention of the grant of the patent: **05.11.2008**
(21) Application number: 04744447.6
(22) Date of filing: 01.07.2004
(51) Int. Cl.: G02C 7/10, G02B 26/02

(54) **SUNGLASSES WITH ADAPTABLE TRANSMISSIVITY**
SONNENBRILLE MIT ADAPTIERBARE TRANSMISSION
LUNETTES DE SOLEIL A TRANSMISSIVITE ADAPTABLE

(30) Priority: 08.07.2003 EP 03102046
(43) Date of publication of application: 19.04.2006
(73) Proprietor: Koninklijke Philips Electronics N.V., 5621 BA Eindhoven (NL)
(72) Inventor: HENDRIKS, Bernardus, H., W., NL-5656 AA Eindhoven (NL); KUIPER, Stein, NL-5656 AA Eindhoven (NL)
(74) Representative: Damen, Daniel Martijn
(86) International application number: PCT/IB2004/051078
(87) International publication number: WO 2005/003843

(56) References cited:
- EP-A- 1 069 450
- EP-A- 1 118 899
- US-A- 4 968 127
- US-A1- 2001 017 985

## Description

The invention relates to improvements to sunglasses.

Conventionally, spectacle users need to adopt one of the following approaches in bright sunlight: either change spectacles for tinted glass of equivalent prescription; use clip-on tinted lenses over their everyday glasses; use so-called react-to-light prescription lenses; or put up with being dazzled. Most of these solutions are rather inconvenient and even react-to-light spectacles can be inconvenient as a sudden change in ambient lighting conditions from light to dark (for instance, when a spectacles wearer goes in doors or enters a tunnel while driving) can include a delay during which the wearer must wait for the lenses to change tint.

US 4,698,127 discloses eyewear having electronically controlled lens structures including a pair of polarising lens having liquid crystal material therebetween.

It is an aim of embodiments of the present invention to provide an alternative solution to the conventional solutions described above.

US 2001/0017985 A1 discloses an optical device capable of controlling its optical transmittance the device having first and second immiscible liquids of equal refractive index but differing transmittance, sealingly contained such that a boundary between the liquids has a predetermined shape. An applied voltage changes the shape of the boundary and changes the quantity of transmitted light through the device.

According to an aspect of the invention, there is provided a pair of sunglasses characterized by comprising at least one electro-wetting lens, the lens comprising a transparent rear wall comprising a rear electrode formed in a region of the internal surface of the rear wall and a transparent front wall comprising a ring-electrode which extends around an internal periphery of the front wall, wherein an interior region of the front wall is hydrophobic or coated with a hydrophobic layer whilst the ring-type electrode is hydrophobically insulated, the rear wall and the front wall defining a cavity between them, within which a first and a second immiscible fluid of dissimilar light transmission properties are confined, the first fluid being the fluid nearest the front wall and the first fluid being a transparent non-conducting fluid being a better light transmitter than the second fluid, the second fluid having a boundary nearest the rear wall and the second fluid being a colored conductive and/or polar fluid,
the surface of the hydrophobic layer building a part of the inner surface of the cavity is concave,
the part of the rear wall building a part of the inner surface of the cavity is convex,
wherein variation in the potential difference between the first and second electrodes aof each electro-wetting lens causes the shape of a boundary M between the first and second fluids to alter from a first state in which the second fluid forms a layer across substantially an entire light transmitting area of an internal surface of the lens and light transmission is at a most reduced state to a second state in which light transmission is at a maximum.

Sunglasses constructed as above, have the advantage over conventional sunglasses in that the two-state nature provided by varying a potential difference provides a convenient manner in which the sunglasses may be altered in opacity at the will of a user and not necessarily at the dictate of ambient light or other conditions.

Preferably, in the second state the second fluid is confined to peripheral regions of the lens.

The first and second fluids are preferably of substantially identical refractive index and specific gravity, this is advantageous as altering boundary conditions between two such fluids will not change the strength of optical lens.

Preferably, the lens comprises a transparent rear wall and a transparent front wall defining a cavity between them, within which the first and second fluids are confined.

In first preferred embodiments, the first and second electrodes of the lens comprise a rear electrode formed in a region of the internal surface of the rear wall and a ring-electrode which extends around an internal periphery of the front wall. In this first embodiment, progressive variation of the potential difference between the electrodes is arranged to progressively alter the shape of the boundary to provide a progressive alteration between the first and second states.

In a first preferred arrangement, the natural state of the lens is the first state (minimum light transmission), and in this first state no potential difference is applied between electrodes of the lens.

In the first preferred arrangement an interior region of the front wall is preferably hydrophobic or coated with a hydrophobic layer , whilst the ring-type electrode and, in the first state, the first fluid is the fluid nearest the front wall, whilst the second fluid is the fluid having a boundary nearest the rear wall. In the first preferred arrangements, the first fluid is preferably a transparent oil, whilst the second fluid is a colored conductive and/or polar fluid, preferably colored water.

In a second preferred arrangement, the natural state of the lens is the second state (maximum light transmission) and in this state no potential difference is applied between electrodes of the lens.

In the second preferred arrangement, a hydrophobic insulator is formed on the ring-type electrode and the front wall is preferably hydrophobic or coated with a hydrophobic layer. Here, the first fluid is the fluid nearest the rear wall, whilst the second fluid is the fluid having a boundary nearest the front wall. In the second preferred arrangement, the first fluid is preferably a transparent polar and/or conductive fluid such as water, whilst the second fluid is a colored non-conductive fluid such as a colored oil. Here, the thickness of the oil layer within the light path transmitting portion of the lens may be continuously varied by varying the potential difference between electrodes.

Choice of an appropriate lens construction with a given natural state of light or dark enables a user to decide whether to choose a pair of glasses which are normally clear or normally dark and choosing the appropriate construction in accordance with the anticipated main reason for use provides potential for extended battery life.

In a further preferred embodiment, a hydrophobic insulator is formed on an interior region of the rear wall and also on a transparent rear electrode and, the first fluid is the fluid which has a boundary nearest the front wall, whilst the second fluid is the fluid having a boundary nearest the rear wall. Here, the first fluid is preferably a transparent polar and/or conductive fluid such as water and the second fluid is a colored oil.

Preferably, the curvature of the front wall, the curvature of the rear wall and the refractive index of the first and second fluids are arranged to correct a visual defect of a wearer. Such corrective type lenses in switchable sunglasses enables the user with eye defects to only need one pair of glasses which also function as sunglasses - avoiding the need for changing pairs.

Manual and/or automatic adjustment means may be provided for altering the electric field applied between the pairs of first and second electrodes. Manual adjustment allows complete freedom of choice to the user, whilst an automatic mode allows a user to have sunglasses which can adapt to preset conditions such as ambient light levels or to change in accordance with pre-programmed conditions.

Making the electrodes transparent whilst optional in many arrangements provides a great deal of freedom in positioning and enables their placement within the optical path of the lens without further restriction of light transmission.

For a better understanding of the invention, and to show how embodiments of the same may be carried into effect, reference will now be made, by way of example, to the accompanying diagrammatic drawings in which:
Figs. 1A and 1B schematically show a first embodiment of lens for use in sunglasses in which the level of light transmitted may be varied according to the choice of a wearer;
Fig. 1C shows an embodiment similar to the lens of Figs. 1A and 1B, however in this embodiment the relative amounts composition and placement of the first and second fluids contained by the lens are different;
Fig. 2 is a schematic diagram illustrating the construction of a further embodiment of lens for use in sunglasses in which the level of light transmitted may be varied according to the choice of a wearer;
Fig. 3 and Fig. 4 illustrate the principles of "electrowetting" as applied to the lens of Fig. 2; and
Fig. 5 shows a pair of spectacles in which the lenses of Fig. 1 or 2 may be embodied.

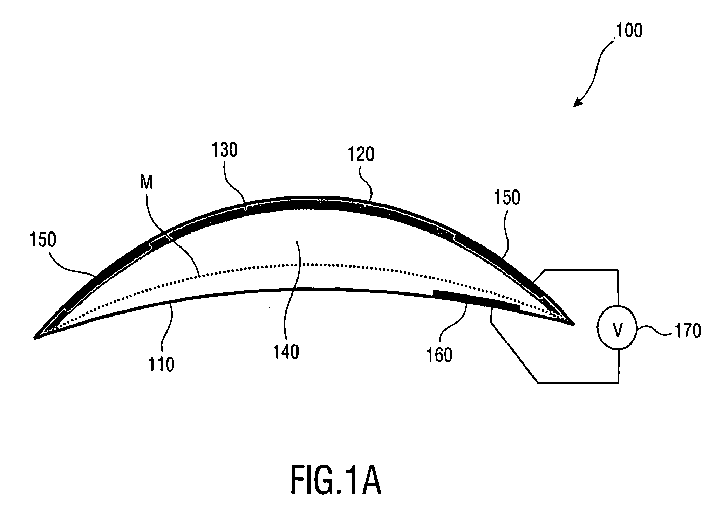

Referring to Fig. 1A, a first embodiment of lens forming part of spectacles according to the invention comprise a transparent rear wall 110 and a transparent front wall 120 defining a cavity 140 between them, a rear electrode 160 formed in a region of the internal surface of the rear wall, a ring-electrode 150 which extends around an internal periphery of the front wall 120 and a hydrophobic insulator 130 formed on the ring-type electrode 150 and preferably covering an interior region of the front wall 120. Preferably but not necessarily the electrodes may be formed of transparent material.

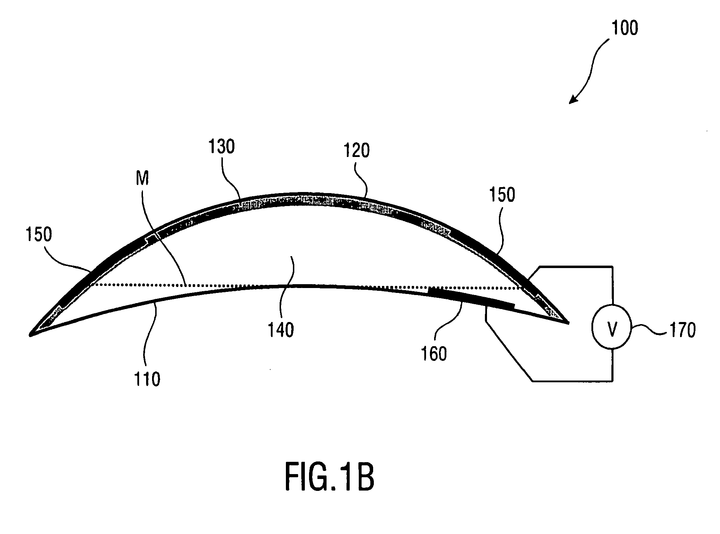

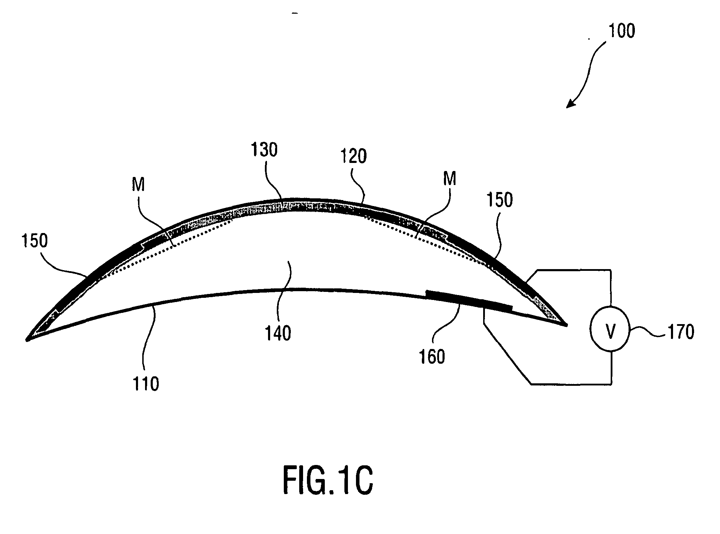

The cavity 140 is filled with first and second fluids and a meniscus line M is shown in Fig. 1 denoting the boundary between the first and second fluids. Here, the second fluid is the fluid nearest the rear wall 110, whilst the first fluid is the fluid having a boundary nearest the front wall 120.

A fluid is a substance that alters it shape in response to any force, that tends to flow or to conform to the outline of its chamber, and that includes gases, vapors, liquids and mixtures of solids and liquids capable of flow.

The first and second fluids are immiscible and have substantially the same refractive index and specific gravities, but different light transmission properties.

The second fluid is a colored electro-conductive electrolyte and the first fluid is a transparent oil. Here, the electro-conductive electrolyte is preferably a water/alcohol mix to which a salt has been added and the second fluid is an oil. Both fluids preferably have a refractive index of approximately 1.38 and a specific gravity of 0.85. In this case, the alcohol is used to decrease the density of water to match the density of the oil. However, the density of the oil may also be increased by adding e.g. CC14 to match the density of the salt solution. Referring now to each of Figs. 1A and 1B, the principles of operation of sunglasses incorporating a lens of the type above described will now be discussed.

Fig. 1A illustrates a first state of the switchable sunglasses in which light transmission is restricted. In detail, it can be seen that in Fig. 1A, where no voltage is applied to the electrodes, the first fluid comprising silicone oil and the second fluid comprising the colored electro-conductive electrolyte have a natural boundary level defined by meniscus M which forms a substantially spherical surface, the radius of curvature of which is essentially determined by the volume of the second fluid and the interfacial tension of the fluids and the walls forming the cavity.

Referring now to Fig. 1B, the situation is shown in which a sufficient voltage is applied between the two electrodes 150, 160 to cause the polar and/or conductive fluid (the electrolyte formed by the colored water) to be attracted towards the ring-type electrodes and vacate the central region of the rear wall (i.e. to clear from the light path). The application of an electric field between the two electrodes, and the fact that the second fluid is electro-conductive causes the second fluid to effectively be attracted towards the ring-type electrode 150, changing the effective contact angle between the meniscus layer M and the sloping front wall 120. With increasing potential difference, the situation is reached in Fig. 1B where the curvature of the meniscus layer M is such that the second fluid is confined to a peripheral region around the edges of the lens 100.

In the above discussion, it must be borne in mind that the second fluid, has reduced light transmission properties as compared to the first fluid. Therefore, in the situation shown in Fig. 1A, a minimum light transmission state is shown, whereas in Fig. 1B, a maximum light transmission state through the lens is shown. It will be appreciated that the change from the state shown in Fig. 1A to the state of fig. 1B is a progressive one and that intermediate potential differences will cause intermediate levels of clearing of the light path and hence light transmission. In this way, the application of potential difference between the two electrodes 150, 160 provides a progressively switchable lens suitable for use in sunglasses.

Although the situation is described in which the second state is reached by increasing the potential difference between the electrodes, the reverse situation is also possible. In fig. 1C the first fluid is the fluid nearest to the rear wall 110 and the second fluid is the fluid having the nearest boundary to the front wall 120. The first fluid is an electro-conductive electrolyte and the second fluid is a colored oil. Here, the electro-conductive electrolyte is preferably a water/alcohol mix to which a salt has been added and the second fluid is a colored silicone oil. Both fluids preferably have a refractive index of approximately 1.38 and a specific gravity of 0.85. In this case, the relative amounts of the fluids are different with only a thin layer of colored oil being provided. Here, the initial contact angle with no applied potential difference applied is such that the meniscus M is also in contact with the center of the front wall as is shown in Fig. 1C. In this (natural) second state, the maximum light transmission is ensured by confining the second fluid to peripheral regions of the lens which are hydrophobic, the ring-electrode 150 also being hydrophobically coated. Increasing the potential difference between the two electrodes 150, 160 causes attraction of the electrolyte forming the first fluid to the ring electrode 150 and displaces the second fluid from peripheral regions toward a central region of the lens giving a similar effect to the one shown in fig. 1A in which light transmission is restricted along the optical path (first state).

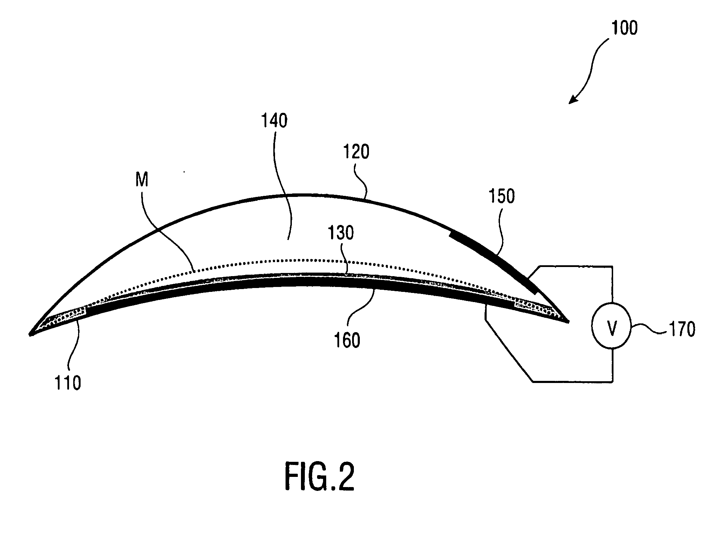

Referring now to Fig. 2, there is shown another embodiment of lens 100 comprising a transparent rear wall 110 and a transparent front wall 120 defining a cavity 140 between them, a transparent rear electrode 160 formed on the internal surface of the rear wall 110 in a central region thereof, a hydrophobic insulator 130 formed over the rear electrode 160 and extending over the rear wall 110 to its' periphery and an electrode 150 which may be a single electrode directly contacting the first fluid and which is preferably transparent or placed out of a field of view. The transparent rear electrode 160 may be a single electrode or may be formed out of various electrodes that can be addressed separately.

The cavity 140 is filled with first and second fluids. A meniscus line M is shown in Fig. 2 denoting the boundary between the first and second fluids. Here, the first fluid is the fluid nearest the front wall 120, whilst the second fluid is the fluid having a boundary nearest the rear wall 110.

The first and second fluids are immiscible and have substantially the same refractive index and specific gravities, but different transmission properties.

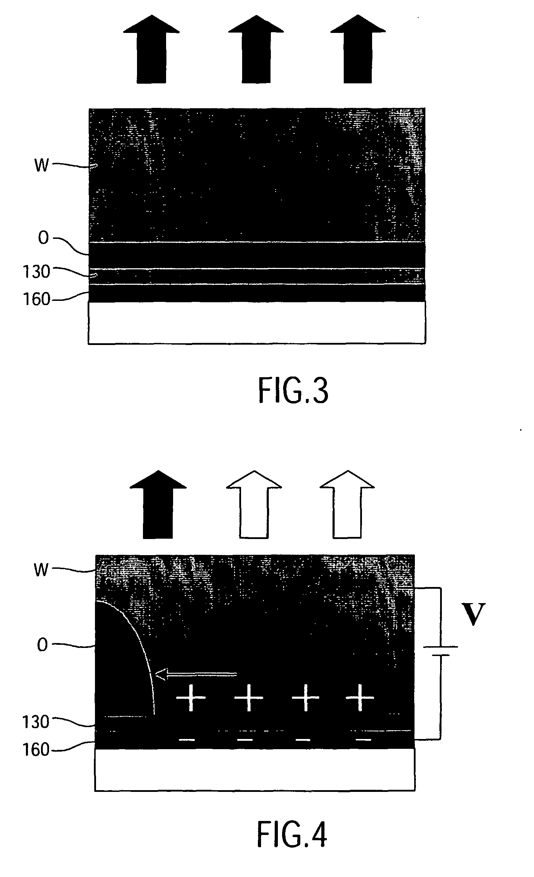

The first fluid is an electroconductive electrolyte and the second fluid is a colored oil. Here, the electroconductive electrolyte is preferably a water/alcohol mix to which a salt has been added and the second fluid is a colored silicone oil. Both fluids may, for example, have a refractive index of approximately 1.38 and a specific gravity of 0.85. Referring now to Figs. 3 and 4, the principles of operation of the sunglasses according to the embodiment of lens shown in fig. 2.

Fig. 3 illustrates a first state of the switchable sunglasses in which light transmission is restricted. In detail, it can be seen that in Fig. 3, where no voltage is applied to the electrodes, there is shown the rear transparent electrode 160, the hydrophobic and electrically insulating coating 130 formed on the transparent electrode 160, a layer of colored oil O, and the salted water electrolyte W which is contacted by the ring-type electrode 150 (not shown). Here, as there is no potential difference between the electrodes 150, 160, the oil O forms a homogeneous film over the hydrophobic insulator 130.

The solid arrows shown on the fig. represent the fact that light transmission is reduced by virtue of having to pass through the layer of lower light transmissibility oil O. Referring now to Fig. 4, there is shown a situation in which a potential difference is applied between the two electrodes.

By applying a voltage between the two electrodes, the electro-wetting effect increases the wettability of the hydrophobic insulator layer 130 by the electrolyte W as free charges in the electrolyte W repelled from the electrode 150 are attracted to the electrode 160 and therefore cause the electrolyte W to be attracted to the electrode 160. If sufficient voltage is applied then electrolyte W is forced to contact the hydrophobic insulator 130 and the oil O is moved aside, giving the state shown in Fig. 4, in which the oil is moved away from the optical axis. Removing the voltage from the electrodes 150,160 allows the switchable optical element I to return to the arrangement of Fig. 3.

As discussed above, the applied potential difference between the two electrodes cause the layer of oil to be effectively pushed away from the area covered by the transparent electrode 160, towards the periphery of the lens. Advantageously, the area toward which the oil is pushed comprises a frame area of the spectacles in which the lenses may be mounted. Moving the lower light transmissibility layer of oil toward the frame enables the central area of the lens to be clear of the coating and to therefore pass more light as illustrated schematically by the solid and non-solid arrows shown in Fig. 4. Hence, this type of lens arrangement is discretely switchable between the on and off states.

A number of measures may be used in order to ensure the oil moves away from the optical axis in a predictable and reproducible manner and that these measures may be combined with the embodiments discussed above. For instance, varying the wettability of interior surfaces of the lens provides a convenient technique for controlling the direction of oil movement in response to an applied voltage.

The rear electrode 160 for instance may be advantageously divided into a number of independently addressable line sections. By applying a voltage to the independently addressable line sections in turn, the wettability of the hydrophobic insulator layer 130 above those sections can be increased in turn, thereby controlling the position at which oil motion is initiated, and the subsequent direction of oil movement across insulator layer 130. Such techniques can produce a constant sized moving area of increased wettability beneath the line section to which a voltage is being supplied. Alternatively, independently addressable line sections can be sequentially energized and the voltage maintained to provide a spreading area of increased wettability beneath a plurality of line sections to which a voltage is being applied. Such a division into many electrodes enables the option to darken the upper part of the glasses, e.g. in order to keep a low sun out of the eyes whilst not decreasing the transmission in a horizontal path. This function may be compared with the sunscreen in a car, or the tinted upper part of a car windscreen.

Other electrode combinations can be used to control the movement of the oil. For example, a number of independently addressable concentric annular electrodes can be used to control the movement away from their common center by applying a voltage to each in turn, starting from the innermost. In another example, an electrode having one non-conducting area below the contact layer could be used. In this case the oil will tend to gather at the region above the non-conducting area.

As an alternative to controlling the wettability of the contact layer by applying different electrode voltages the inherent wettability of the contact layer can be varied across the element, for example by providing a relatively less hydrophobic portion. In this case, motion of the oil in response to the voltage applied to the electrodes will be initiated from the relatively less hydrophobic region.

The side walls of the fluid chamber can be coated with hydrophobic or hydrophilic materials so that a variation in the interfacial tension between the side walls and the oil/water ensures that the oil will move in a particular direction in response to an applied electrode voltage.

As another means of varying the wettability of the interior surfaces of the fluid chamber, the thickness or dielectric properties of the contact layer can be given a predetermined profile across the element, to give differing electric field strength at different areas in response to an applied electrode voltage. For example, at thinner regions of the contact layer the water and electrode are relatively closer together, producing a higher field. Movement of the oil is initiated at a region of higher field due to the increased wettability in this region. For example, a hydrophobic insulator layer 130 having a first concave surface in contact with the rear electrode 160 and a second substantially planar surface in contact with the oil could be used. In this case the oil layer above the thinnest portion of the insulator layer 130 would move first, with the oil motion progressing from this area.

Yet a further technique for varying the wettability of the insulator layer 130 includes providing a projection extending from the insulator layer 130. The projection is arranged to protrude from the oil layer and communicate directly with the water when no voltage is applied to the electrodes. The availability of the surface of the projection to the water provides the water with a starting point from which it can more easily displace the oil when a voltage is applied to the electrodes. In addition, the projection may be covered with a hydrophilic coating in the region which protrudes from the oil layer. The increased wettability of the projection by the water in the region which protrudes from the oil layer will tend to increase the effect of the projection.

In each of the lens arrangements described above, the interior walls of the fluid cavity which contact the water in the off state are preferably hydrophilic. In this way the water is retained between the two bodies of oil, and the oil bodies are hindered from moving away from the extremities of the element.

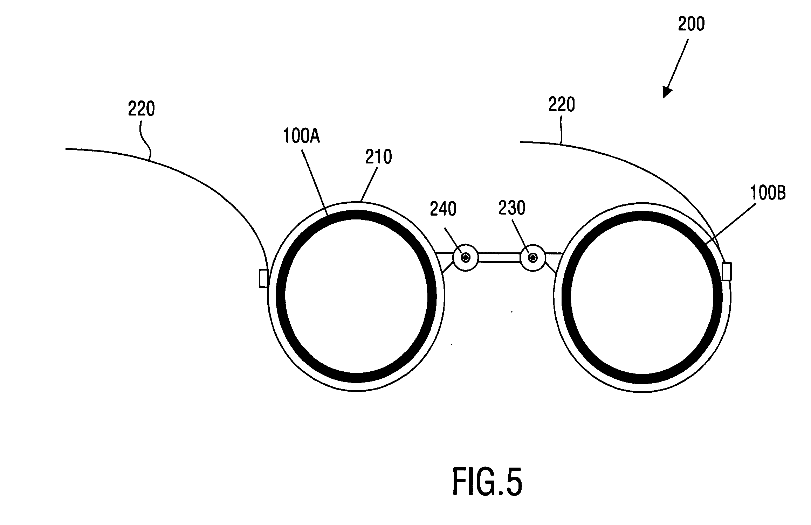

Referring now to Fig. 5, there is shown a pair of sunglass spectacles 200 incorporating lenses of either of the types above described. The spectacles 200 comprise lenses 100A, 100B, a frame 210, arms 220, an adjustment knob 230, and a battery housing 240. Here, the adjustment knob 230 and battery housing 240 are shown mounted centrally on a bridge portion of the frame.

The battery contained within the housing 240 is connected to electrodes 150, 160 of each of the lenses 100A, 100B, via the adjustment knob 240. Here, the adjustment knob 240 preferably controls a variable resistor which is arranged to adjust the voltage (i.e. potential difference) applied between the pairs of electrodes 150, 160 of the lens 100A, 100B.

In the configuration shown in Fig. 5, a dark ring 250 is observable around a periphery of the lenses adjacent to the frame 210. This dark ring 250 represents the oil layer O in the state described in relation to Fig. 3. In other words, Fig. 4 shows the sunglasses in a state in which maximum light transmission is allowed. It will be appreciated that at this point, the potential difference between the electrodes 150 and 160 for the lens 100A, 100B is at a maximum. As control knob 230 is adjusted to reduce the potential difference between respective electrodes 150, 160, the oil layer will revert to its homogeneous film state shown in Fig. 1A or 3. At this point, the dark ring around the exterior of the lenses 100A, 100B will have disappeared and, instead, the light transmission of the central area of the lens 100A, 100B will be reduced.

It will be appreciated that whilst in the above discussion a colored oil has been contemplated, such coloring need not be present in order for the light transmission characteristics of the lenses to be varied. Indeed, the coloring of the oil (or indeed any other second fluid) may be appropriately chosen and may be provided to give a "designer" touch to the glasses. Indeed, the glasses could be arranged so as to be fashion items so that the first and second fluids are of differing colors and adjustment of the adjustment knob 230 will change the manner in which the glasses appear to the onlooker and, also, will change the coloring of the view shown by the wearer. Any combination of effects given by dual coloring may be chosen. For instance, the first fluid may have a green tint, the second fluid may have a red tint.

It will be appreciated that the strength of lens (in terms of correction of eyesight deficiency) is determined by the shaping of the front and rear walls 110, 120 and by the refractive index of the two fluids contained within them. In order to avoid problems with focus being varied when adjusting transmissibility, the two fluids must be of substantially the same refractive index.

It will also be understood that whilst manual adjustment of the sunglasses has been described by means of an adjuster, automatic operation may be provided for. For instance, if it is desired to change tint according to ambient lighting conditions than an optoelectronic element such as a light dependent resistor may be employed in place of a manually variable resistor. Additional control elements may be provided to accomplish such automatic control of the sunglasses. Other automatic arrangements may be provided to give non-ambient light dependent characteristics. For example, a programmable party mode may be provided for providing time dependent variation to the glasses.

The skilled man will realize that many other variations to the invention are possible without departing from the scope.

## Claims

1. A pair of sunglasses (200) **characterized by** comprising at least one electro-wetting lens (100), the lens (100) comprising a transparent rear wall (110) comprising a rear electrode (160) formed in a region of the internal surface of the rear wall (110) and a transparent front wall (120) comprising a ring-electrode (150) which extends around an internal periphery of the front wall (120), wherein an interior region of the front wall (120) is hydrophobic or coated with a hydrophobic layer (130) whilst the ring-type electrode (150) is hydrophobically insulated, the rear wall (110) and the front wall (120) defining a cavity (140) between them, within which a first and a second immiscible fluid of dissimilar light transmission properties are confined, the first fluid being the fluid nearest the front wall (120) and the first fluid being a transparent non-conducting fluid being a better light transmitter than the second fluid, the second fluid having a boundary nearest the rear wall (110) and the second fluid being a colored conductive and/or polar fluid,
the surface of the hydrophobic layer (130) building a part of the inner surface of the cavity (140) is concave,
the part of the rear wall (110) building a part of the inner surface of the cavity (140) is convex,
wherein variation in the potential difference between the first and second electrodes (150, 160) of each electro-wetting lens causes the shape of a boundary (M) between the first and second fluids to alter from a first state in which the second fluid forms a layer across substantially an entire light transmitting area of an internal surface of the lens and light transmission is at a most reduced state to a second state in which light transmission is at a maximum.

2. The sunglasses (200) of claim 1 wherein in the second state the second fluid is confined to peripheral regions of the lens (100).

3. The sunglasses (200) of any preceding claim, wherein the natural state of the lens (100) is the first state, and in this first slate no potential difference is applied between electrodes (150, 160) of the lenses.

4. The sunglasses (200) of any preceding claim, wherein progressive variation of the potential difference between the electrodes (150, 160) is arranged to progressively alter the shape of the boundary (M) provide a progressive alteration between the first and second states.

5. The sunglasses (200) of any preceding claim, wherein the curvature of the front wall (120), the curvature of the rear wall (110) and the refractive index of the first and second fluids are arranged so as to correct a visual defect of a wearer,

6. The sunglasses (200) of any preceding claim, wherein manual adjustment means (240) are provided for altering the potential difference applied between the pairs of first and second electrodes (150, 160).

7. The sunglasses (200) of any preceding claim, wherein automatic adjustment means are provided for altering the potential difference applied between first and second pairs of electrodes (150, 160),

8. The sunglasses (200) of any preceding claim, wherein the first and second fluids are of substantially the same refractive index and specific gravity.

## Patentansprüche

1. Sonnenbrille, **gekennzeichnet dadurch, dass** sie zumindest ein Elektrobenetzungsbrillenglas (100) umfasst, wobei das Brillenglas (100) eine transparente hintere Wandung (110) mit einer in einem Bereich der inneren Fläche der hinteren Wandung (110) gebildeten hinteren Elektrode (160) und eine transparente vordere Wandung (120) mit einer um einen inneren Randbereich der vorderen Wandung (120) verlaufenden Ring-Elektrode (150) umfasst, wobei ein Innenbereich der vorderen Wandung (120) hydrophob ist oder mit einer hydrophoben Schicht (130) beschichtet ist, während die Ring-Elektrode (150) hydrophobisch isoliert ist, wobei die hintere Wandung (110) und die vordere Wandung (120) einen zwischen ihnen liegenden Hohlraum (140) definieren, in dem ein erstes und eine zweites, nicht mischbares Fluid, die nicht gleiche Lichtdurchlässigkeitseigenschaften haben, eingeschlossen sind, wobei das erste Fluid das am nächsten bei der vorderen Wandung (120) liegende Fluid ist und das erste Fluid ein transparentes, nicht leitendes Fluid ist, das ein besserer Lichtübertrager ist als das zweite Fluid, wobei das zweite Fluid eine am nächsten bei der hinteren Wandung (110) liegende Grenze hat und das zweite Fluid ein farbiges, leitfähiges und/oder polares Fluid ist,
wobei die Oberfläche der hydrophoben Schicht (130), die einen Teil der Innenfläche des Hohlraums (140) bildet, konkav ist,
der Teil der hinteren Wandung (110), der einen Teil der Innenfläche des Hohlraums (140) bildet, konvex ist,
wobei eine Änderung der Potentialdifferenz zwischen der ersten und der zweiten Elektrode (150, 160) jedes Elektrobenetzungsbrillenglases bewirkt, dass sich die Form einer Grenze (M) zwischen dem ersten und dem zweiten Fluid von einem ersten Zustand, in dem das zweite Fluid eine Schicht über im Wesentlichen einem ganzen, Licht durchlassenden Gebiet einer inneren Fläche des Brillenglases bildet und Lichtdurchlässigkeit sich in einem am stärksten reduzierten Zustand befindet, in einen zweiten Zustand, in dem die Lichtdurchlässigkeit maximal ist, ändert.

2. Sonnenbrille (200) nach Anspruch 1, bei der in dem zweiten Zustand das zweite Fluid auf Randbereiche des Brillenglases (100) beschränkt ist.

3. Sonnenbrille (200) nach einem vorhergehenden Anspruch, bei der der natürliche Zustand des Brillenglases (100) der erste Zustand ist, und in diesem ersten Zustand zwischen Elektroden (150, 160) der Brillengläser keine Potentialdifferenz angelegt ist.

4. Sonnenbrille (200) nach einem vorhergehenden Anspruch, bei der fortschreitende Veränderung der Potentialdifferenz zwischen den Elektroden (150, 160) eingerichtet ist, die Form der Grenze (M) fortschreitend zu ändern, um eine fortschreitende Änderung zwischen dem ersten und dem zweiten Zustand zu schaffen.

5. Sonnenbrille (200) nach einem vorhergehenden Anspruch, bei der die Krümmung der vorderen Wandung (120), die Krümmung der hinteren Wandung (110) und die Brechzahl des ersten und des zweite Fluids so ausgebildet sind, dass ein Sehfehler eines Brillenträgers korrigiert wird.

6. Sonnenbrille (200) nach einem vorhergehenden Anspruch, bei der manuelle Einstellmittel (240) zum Ändern der zwischen den Paaren aus erster und zweiter Elektrode (150, 160) angelegten Potentialdifferenz vorgesehen sind.

7. Sonnenbrille (200) nach einem vorhergehenden Anspruch, bei der automatische Einstellmittel zum Ändern der zwischen ersten und zweiten Paaren von Elektroden (150, 160) angelegten Potentialdifferenz vorgesehen sind.

8. Sonnenbrille (200) nach einem vorhergehenden Anspruch, bei der das erste und das zweite Fluid im Wesentlichen die gleiche Brechzahl und relative Dichte haben.

## Revendications

1. Paire de lunettes de soleil (200), **caractérisée en ce qu'**elle comprend au moins un objectif de mouillage électrique (100), l'objectif (100) comprenant une paroi arrière transparente (110) comprenant une électrode arrière (160) qui est formée dans une région de la surface interne de la paroi arrière (110) et une paroi avant transparente (120) comprenant une électrode annulaire (150) qui s'étend autour d'une périphérie interne de la paroi avant (120) où une région intérieure de la paroi avant (120) est hydrophobe ou est revêtue d'une couche hydrophobe (130) alors que l'électrode annulaire (150) est d'une manière hydrophobe isolée, la paroi arrière (110) et la paroi avant (120) définissant une cavité (140) entre elles, cavité dans laquelle un premier et un deuxième fluide non miscible ayant des propriétés différentes de transmission de la lumière sont confinés, le premier fluide étant le fluide qui se situe le plus proche de la paroi avant (120) et le premier fluide étant un fluide non conducteur transparent étant un meilleur émetteur de la lumière que le deuxième fluide, le deuxième fluide ayant une limite qui se situe le plus proche de la paroi arrière (110) et le deuxième fluide étant un fluide coloré conducteur et/ou polaire,
la surface de la couche hydrophobe (130) établissant une partie de la surface intérieure de la cavité (140) est concave,
la partie de la paroi arrière (110) établissant une partie de la surface intérieure de la cavité (140) est convexe,
où une variation de la différence de potentiel entre les première et deuxième électrodes (150, 160) de chaque objectif de mouillage électrique effectue que la forme d'une limite (M) entre les premier et deuxième fluides change d'un premier état dans lequel le deuxième fluide constitue une couche à travers sensiblement une zone entière de transmission de la lumière d'une surface interne de l'objectif et où la transmission de la lumière se situe à un état le plus réduit à un deuxième état dans lequel la transmission de la lumière se situe à un maximum.

2. Paire de lunettes de soleil (200), dans laquelle dans le deuxième état le deuxième fluide est confiné aux régions périphériques de l'objectif (100).

3. Paire de lunettes de soleil (200) selon l'une quelconque des revendications précédentes 1 à 2, dans laquelle l'état naturel de l'objectif (100) se situe dans le premier état et dans laquelle dans ce premier état pas de différence de potentiel n'est appliquée entre les électrodes (150, 160) des objectifs.

4. Paire de lunettes de soleil (200) selon l'une quelconque des revendications précédentes 1 à 3, dans laquelle la variation progressive de la différence de potentiel entre les électrodes (150, 160) est agencée de manière à changer progressivement la forme de la limite (M) pour fournir un changement progressif entre les premier et deuxième états.

5. Paire de lunettes de soleil (200) selon l'une quelconque des revendications précédentes 1 à 4, dans laquelle la courbure de la paroi avant (120), la courbure de la paroi arrière (110) et l'indice de réfraction des premier et deuxième fluides sont agencés de manière à corriger un défaut visuel d'un porteur.

6. Paire de lunettes de soleil (200) selon l'une quelconque des revendications précédentes 1 à 5, dans laquelle les moyens de réglage manuel (240) sont fournis pour changer la différence de potentiel qui est appliquée entre les première et deuxième paires d'électrodes (150, 160).

7. Paire de lunettes de soleil (200) selon l'une quelconque des revendications précédentes 1 à 6, dans laquelle les moyens de réglage automatique sont fournis pour changer la différence de potentiel qui est appliquée entre les première et deuxième paires d'électrodes (150, 160).

8. Paire de lunettes de soleil (200) selon l'une quelconque des revendications précédentes 1 à 7, dans laquelle les premier et deuxième fluides présentent sensiblement le même indice de réfraction et la même gravité spécifique.
